# EUROPÄISCHE PATENTSCHRIFT

(11) **EP 2 873 629 B1**
(45) Veröffentlichungstag und Bekanntmachung des Hinweises auf die Patenterteilung: **15.03.2017**
(21) Anmeldenummer: 14192655.0
(22) Anmeldetag: 11.11.2014
(51) Int. Cl.: B65D 39/00

(54) **Emaillierter Behälter oder anderes emailliertes Bauteil mit innerem Volumen mit Anschlussstutzen**
Enamelled containers or other enamelled component with internal volume with sleeve connection
Récipient émaillé ou autre composant émaillé ayant des volumes intérieurs et des manchons de raccordement

(30) Priorität: 15.11.2013 DE 102013112587
(43) Veröffentlichungstag der Anmeldung: 20.05.2015
(73) Patentinhaber: THALETEC GmbH, 06502 Thale (DE)
(72) Erfinder: Reinemuth, Jürgen, 38889 Blankenburg (DE)
(74) Vertreter: Einsel, Martin

(56) Entgegenhaltungen:
- EP-A1- 0 369 086
- DE-A1- 10 224 369
- DE-C- 668 517
- FR-A- 370 440
- US-A- 2 154 574
- US-A- 4 289 334

## Beschreibung

Die Erfindung betrifft einen Emaillierten Behälter oder anderes emailliertes Bauteil mit innerem Volumen, mit einem Innenraum zur Aufnahme von fluiden Medien, mit einer Behälterwandung, die den Innenraum von der Umgebung trennt, mit einer dem Innenraum zugewandten Wandungsinnenseite, mit mindestens einem durch die Behälterwandung geführten Anschlussstutzen, der eine ringförmige Aushalsung der Behälterwandung aufweist und eine Öffnung vom Innenraum in die Umgebung bildet, und mit einem Einbauteil, das passend zum Einbau in die Öffnung des Anschlussstutzens ausgebildet ist, wobei der Anschlussstutzen einen konischen Abschnitt aufweist, der sich in Richtung zum Innenraum des Behälters verjüngt und eine kegelförmige Innenfläche zur Öffnung bildet, und wobei das Einbauteil nach dem Einsetzen des Einbauteils mit des konischen Abschnitts dem Anschlussstutzens eine Abdichtung bildet.

Emaillierte Behälter zur Aufnahme fluider Medien werden in der chemischen Industrie, der pharmazeutischen Industrie, der Biochemie und in vielen anderen Anwendungsfeldern verwendet. Unter fluiden Medien können flüssige und gasförmige Stoffe verstanden werden, ebenso auch Mischungen davon, oder auch ähnlich aufgebaute pulverförmige Stoffe und Mischungen mit diesen, da es sich auch in diesem Falle um fließfähige Medien handelt. Die fluiden Medien werden in diesen Behältern aufbewahrt oder es finden chemische und physikalische Reaktionen statt. Es gibt auch derartige Behälter, in denen Rühr- und Mischvorgänge innerhalb des Innenraumes des Behälters stattfinden.

Neben emaillierten Behältern gibt es auch andere Bauteile mit einem inneren Volumen, bei denen alle Flächen des Bauteils, die mit einem fluiden Medium in Berührung kommen, emailliert sind. Es handelt sich dabei beispielsweise um sogenannte Kolonnenschüsse, also im Grundsatz Rohre mit einem großen Durchmesser. Auch Rohre, Rohrbögen oder spezielle Ventilkörper und dergleichen können derart aufgebaut sein und eine Wandung mit einer Wandungsinnenseite sowie einem durch die Wandung geführten Anschlussstutzen aufweisen. Letztlich handelt es sich auch bei diesen Bauteilen im übertragenen Sinne um "Behälter". Im Folgenden wird allgemein von "Behältern" gesprochen, wobei dieser Begriff dann auch derartige emaillierte Bauteile umfassen soll.

Aus der US-A-5,746,344 ist ein Aufbau für einen Tankanschluss bekannt, bei welchem ein Einsatzelement aus einem Kunststoffmaterial mittels eines Verbindungselementes aus Kunststoffmaterial eingeklebt wird in eine metallische Anschlussbuchse. Das Einsatzelement und die metallische Anschlussbuchse weisen jeweils einen oberen und einen unteren zylindrischen Bereich auf, die einen unterschiedlichen Durchmesser besitzen und durch eine Stufe voneinander getrennt sind.

Weitere derartige Behälter sind beispielsweise aus der DE 298 08 343 U1 bekannt. Dort ist das Augenmerk auf einen Ventilsitz für ein Bodenablassventil gerichtet. Die Fluide im Innenraum des emaillierten Behälters müssen natürlich auch entnommen werden können, und hierfür dient ein solches Bodenablassventil, das ein gesteuertes und beabsichtigtes Ablaufen des Fluides aus dem Innenraum ermöglicht.

Hierzu wird in der Wandung des Behälters eine Öffnung geschaffen und in diese Öffnung dann ein Einbauteil eingesetzt. Mit dem Einbauteil kann dann beispielsweise die Öffnung verschlossen werden. Das Einbauteil selbst kann als Bodenventil ausgebildet sein, durch welches dann in geeigneter Form das kontrollierte Ablaufen des Fluides erfolgen kann.

Zwischen dem Ventil beziehungsweise dem Einbauteil und dem Ventilsitz beziehungsweise dem Innenrand der Öffnung in der Behälterwandung ist eine Abdichtung erforderlich, um hier ein nicht gewünschtes und unkontrolliertes Durchtreten von Fluiden aus dem Innenraum nach außen oder zumindest hin zur Flanschfläche oder auch ein nicht gewünschtes Einströmen von Fluiden, beispielsweise von Gasen, aus der Umgebungsluft in den Innenraum des Behälters zu verhindern oder jedenfalls zu reduzieren.

Durch Fertigungstoleranzen ist dies problematisch. Während die DE 298 08 343 U1 druckbeaufschlagte Ringbandagen oder dergleichen vorsieht, machen andere bekannte Lösungsversuche von umlaufenden Dichtlippensystemen Gebrauch.

Aus der US-A-4,289,334 ist ein Anschlussstutzen für einen emaillierten Behälter bekannt, bei dem in den Anschlussstutzen ein weiterer Metallstutzen eingeschraubt werden kann. Dies erfolgt über ein Gewinde in einem zylindrischen Abschnitt des Anschlussstutzens und ein entsprechendes Gegengewinde in dem weiteren Stutzen. Eine Abdichtung erfolgt über einen O-Ring, der zwischen ein sich vom Innenraum nach außen erweiterndes konisches Stück des Anschlussstutzens und ein passendes Gegenstück des weiteren Stutzens in einem Hohlraum eingelegt und beim Einschrauben festgezogen wird. Eine zusätzliche Abdichtung erfolgt über einen weiteren O-Ring.

Diese Konzepte können nicht befriedigen. Sie sind aufwändig und trotzdem nicht in jeder Beziehung zuverlässig, zumal sich in den Bereichen zwischen dem Einbauteil und der umgebenden ringförmigen Aushalsung trotz der Dichtungselemente spaltförmige, unerwünschte Toträume bilden.

Um diese gleichwohl bestehenbleibenden spaltförmigen, unerwünschten Toträume zu reduzieren, wird in der EP 1 549 867 B1 ein Bodenauslaufventil für derartige Behälter vorgeschlagen, bei der das Einbauteil zum oberen Ende hin eine konische Verjüngung aufweist, die also dem Behälterinneren zugewandt ist. Zusätzlich ist zwischen der konischen Verjüngung und der Emaillierung der Behälterwand ein zylindrisches Dichtungsmodul eingeschaltet, welches einen im oberen Bereich vorgesehenen verstärkten elastisch/plastisch verformbaren ringförmigen Dichtungsbereich besitzt.

Dieses Dichtungsmodul ist beispielsweise ein Kunststoffteil aus Polytetrafluorethylen (PTFE) oder weist einen gewellten Auslauf im Bereich seines freien Endes auf, durch den es sich elastisch an dem konisch sich erweiternden Abschnitt des Einbauteils abstützt. Auch ein ringförmig das Einbauteil umgebendes auswechselbares Dichtungselement kann vorgesehen werden, das sich dann an dem konischen Abschnitt abstützt.

Es entsteht also eine Art radial wirkende Dichtung mit einem federnd vorgespannten Dichtungsmodul, deren Anpresskraft sich über einen konischen Abschnitt eines Einbauteils bildet.

Mit diesem Konzept werden einsetzbare und austauschbare Bodenauslaufventile verbessert, es bleibt jedoch die generelle Problematik einer Optimierung von Öffnungen in emaillierten Behältern zur Aufnahme von Fluiden.

Aufgabe der Erfindung ist es daher, einen Behälter vorzuschlagen, der ein zusätzliche Möglichkeiten und Sicherheiten bietendes Element zur Gestaltung der Öffnungen in derartigen Behältern aufweist.

Diese Aufgabe wird bei einem gattungsgemäßen Behälter erfindungsgemäß dadurch gelöst, dass eine Außenfläche des Einbauteils nach dem Einsetzen des Einbauteils an der kegelförmigen Innenfläche des konischen Abschnitts des Anschlussstutzens exakt anliegt und eine statische und totraumarme Abdichtung bildet.

Erfindungsgemäß wird also die Öffnung in der ringförmigen Aushalsung mit einem konischen Abschnitt ausgerüstet. Dies bedeutet, dass anders als in der EP 1 549 867 B1 nicht das Einbauteil beziehungsweise das Bodenablassventil mit einem ringförmigen konischen Abschnitt ausgestattet wird, sondern dass der gesamte Behälter mit einer neuen Öffnungsstruktur versehen wird, indem nun der Anschlussstutzen, also das behälterseitige Gegenstück zum Einbauteil, eine kegelförmige Fläche erhält.

Es muss sich dabei nicht nur um Öffnungen für Bodenablassventile handeln, sondern es können auch andere Öffnungen entsprechend ausgerüstet werden. Dies gilt beispielsweise für Zuführöffnungen im oberen Bereich eines emaillierten Behälters oder auch für seitliche Öffnungen. Es gilt auch für Öffnungen, in denen Reparaturschürzen eingesetzt werden.

Mit der technischen Lösung gemäß der Erfindung wird wiederum eine radial wirkende Dichtung erzeugt. Die Anpresskraft erfolgt hier über eine konische Fläche am Umfang der Öffnung. Die Innenfläche eines Anschlussstutzens wird in einem bestimmten Abschnitt konisch mit einer kegelförmigen Fläche ausgeführt.

Das einsetzbare Einbauteil kann dann in einer Ausführungsform beim axialen Einpressen über eine ebenfalls konische Fläche dagegen abdichten, in einer anderen Ausführungsform dagegen ist auch eine Abdichtung gegenüber einen zylindrischen Einbauelement vorgesehen.

Durch die Erfindung entsteht ein emaillierter Behälter mit einer Öffnung beispielsweise für Bodenablassventile mit einem Öffnungsbereich, welcher wesentlich besser reinigbar ist als herkömmliche, vergleichbare emaillierte Behälter und der darüber hinaus auch noch totraumarm ist.

Mit der Erfindung entsteht ein emaillierter Behälter mit einem statischen Abdichtungssystem für einen Anschlussstutzen. Zwischen einem Einbauteil und dem Anschlussstutzen kommt es mithilfe eines konischen Dichtbereichs zu einer statischen Abdichtung. Der konische Dichtbereich wird aus einer konischen Fläche des Anschlussstutzens und einer gegenüberliegenden umlaufenden Linie oder Fläche am Anbauteil gebildet.

Der Stutzen weist bevorzugt zwei oder mehr im Wesentlichen ringförmige oder zylindrische Bereiche auf. Der Durchmesser des dem Außenraum benachbarten zylindrischen Bereichs ist größer als der Durchmesser des dem Innenraum des Behälters benachbarten zylindrischen Bereichs.

Der Übergang zwischen den beiden zylindrischen Bereichen wird durch eine kegelförmige Fläche gebildet.

Zusätzlich ist ein Montieren und Demontieren entsprechender Einbauteile, also beispielsweise von Ventilen in Anschlussstutzen, sehr einfach möglich.

Die konische Abdichtung verbessert die Dichtigkeit der Lösung, und erzeugt durch axiales Einpressen des Einbauteils eine hinreichende radiale Dichtkraft ohne dass von Dichtlippen oder Verschleißteilen oder auch elastisch federnd vorgespannten Elementen Gebrauch gemacht werden muss.

Von besonderem Vorteil ist auch eine entstehende Reparaturmöglichkeit. Gelegentlich kommt es bei den Nutzern zu Beschädigungen an emaillierten Anschlussstutzen. Insbesondere die in den Umgebungsraum übergehenden Abschnitte des emaillierten Anschlussstutzens sind hier gefährdet dahingehend, dass versehentlich Teile dort anstoßen, etwa nicht sachgemäß gehandhabte Einbauteile. Diese Schäden sind dann verständlicherweise empfindlich gegenüber dem häufig aggressiven Fluid, das sich im Inneren des emaillierten Behälters befindet und dort entnommen wird.

Um eine derartige Beschädigung der vorgeschädigten emaillierten Bereiche durch das aggressive Fluid möglichst zu vermeiden, werden sogenannte "Reparaturschürzen" eingesetzt. Diese Reparaturschürzen sehen weitgehend wie ein an dieser Stelle einzusetzendes Einbauteil aus, dichten aber auf einer zylindrischen Fläche ab. Gerade auch gegenüber derartigen Reparaturschürzen ist nun eine wesentlich bessere und sichere Abdichtung an einer Dichtfläche möglich.

Von besonderem Vorteil ist es, dass mit der Erfindung emaillierte Behälter in Serie hergestellt werden können, die dann alle ein oder mehrere derartige Anschlussstutzen mit einem konischen Abschnitt aufweisen. Die Anschlussstutzen werden gegenüber herkömmlichen emaillierten Behältern mit Anschlussstutzen hinsichtlich der Nennmaße nicht verändert. Das bedeutet, dass beispielsweise übliche Rohrleitungen oder dergleichen problemlos auch an die erfindungsgemäß ausgebildeten Anschlussstutzen angebaut werden können, ohne dass es bei den Rohrleitungen eine Modifikation oder Funktionseinschränkung geben muss. Auch die für das Abdichten von emaillierten Stutzen üblichen Flachdichtungen (z.B. nach DIN 28148) können ohne Modifikation verwendet werden.

Es ist nämlich auch möglich, Einbauteile mit nicht konischen, sondern ausschließlich zylindrischen Bereichen für die Kontaktbildung zu den Anschlussstutzen ebenfalls dicht anzuschließen. Der konische Bereich im Anschlussstutzen kann auch mit einer ringförmig anliegenden und umlaufenden zylindrischen Kontaktfläche dicht abschließen.

Es entsteht also ein Anschlusssystem, mit dem sowohl zylindrische wie auch konische Einbauteile dicht in dem Anschlussstutzen montiert werden können. Das System ist besser reinigbar und totraumarm. Es spielt keine Rolle mehr, wie das Gegenstück, also das Einbauteil, im Einzelfall aussieht oder wie ganz genau dann die Dichtung erfolgen soll, also als linienförmige Pressung, als flächige Pressung, hartdichtend oder weichdichtend mit einem weichelastischen Element.

Besonders bevorzugt ist es, wenn die kegelförmige Innenfläche des Anschlussstutzens einen Steigungswinkel von weniger als 45°, bevorzugt von 15° oder weniger, besitzt.

In der Ausführungsform, in der eine kegelförmige Innenfläche des Anschlussstutzens einer kegelförmigen Außenfläche des Einbauteils gegenüberliegt, ist es bevorzugt, wenn der konische Abschnitt des Einbauteils den gleichen oder einen kleineren Steigungswinkel wie die kegelförmige Innenfläche des konischen Abschnitts des Anschlussstutzens besitzt.

Bei gleichem Steigungswinkel entsteht dann eine flächige Abdichtung, bei einem kleineren Steigungswinkel entsteht eine linienförmige Dichtkante. Beide Varianten sind in der Lage, eine gewünschte Abdichtung herzustellen. Es ist also möglich, bei ein und demselben Steigungswinkel des konischen Abschnitts des Anschlussstutzens verschiedene Einbauteile einzusetzen, die unterschiedlich ausgestaltete Steigungswinkel ihres konischen Abschnitts aufweisen. Dadurch erhöht sich die flexible Anwendbarkeit der erfindungsgemäßen Behälter.

Diese Größenordnung des Steigungswinkels des konischen Abschnitts hat sich als besonders praktikabel erwiesen. Sie ist sowohl herstellungstechnisch wie auch anwendungstechnisch von Vorteil.

Weitere bevorzugte Merkmale sind in den Unteransprüchen und in den beigefügten Zeichnungen sowie der beigefügten Figurenbeschreibungen angegeben.

Im Folgenden wird anhand der Zeichnungen ein Ausführungsbeispiel der Erfindung näher beschrieben. Es zeigen:
- **Figur 1**: eine schematische Seitenansicht eines Behälters mit einem Anschlussstutzen;
- **Figur 2**: eine vergrößerte, schematische Darstellung des Bereichs des Anschlussstutzens des Behälters aus Figur 1;
- **Figur 3**: eine vergrößerte Darstellung des Bereichs des Anschlussstutzens gemäß einer alternativen Ausführungsform der Erfindung;
- **Figur 4**: eine vergrößerte Schnittdarstellung eines Details aus der Figur 3;
- **Figur 5**: eine vergrößerte, schematische Darstellung im Schnitt für eine andere Ausführungsform eines Anschlussstutzens des Behälters; und
- **Figur 6**: eine vergrößerte Schnittdarstellung eines Details aus Figur 5.

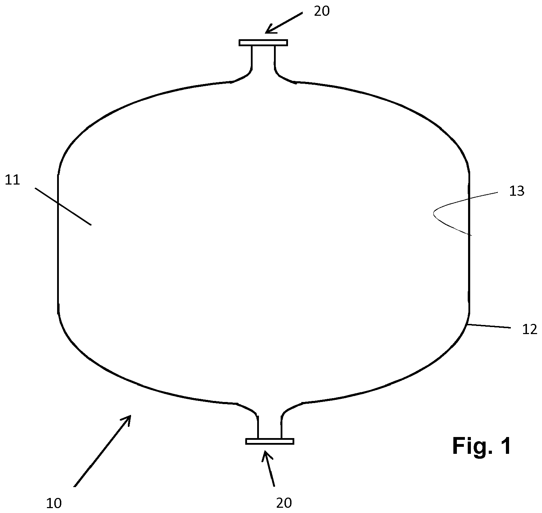

In der **Figur 1** sieht man schematisch einen Behälter 10. Ein derartiger Behälter 10 kann etwa in der chemischen oder pharmazeutischen Industrie eingesetzt werden. Er weist einen Innenraum 11 auf, in welchem Fluide untergebracht werden, beispielsweise zum kontrollierten Ablaufen einer Reaktion, zum Aufheizen, zum Abkühlen oder auch bei Vorsehen von (nicht dargestellten) Rührelementen zum Mischen.

Der Innenraum 11 des Behälters 10 ist von einer Behälterwandung 12 umgeben. Die Behälterwandung besitzt eine dem Innenraum 11 zugewandte Wandungsinnenseite 13.

Insbesondere die Wandungsinnenseite 13 derartiger Behälter 10 ist emailliert, da die im Innenraum 11 befindlichen Fluide aggressive Medien sein können, die sonst die Wandungsinnenseite der Behälterwandung 12 chemisch oder mechanisch angreifen.

Der Behälter 10 ist außerdem mit Anschlussstutzen 20 versehen. In der dargestellten Ausführungsform sind zwei Anschlussstutzen 20 abgebildet. Man kann sich vorstellen, dass über den oberen Anschlussstutzen 20 das Fluid in den Innenraum 11 zugeführt wird oder aber auch, dass während des Reaktionsvorganges im Innenraum 11 dem Fluid noch zusätzliche Reagenzien zugeführt werden, beispielsweise Flüssigkeiten, pulverförmige Mittel oder dergleichen.

Auf der Unterseite ist ein weiterer Anschlussstutzen 20 vorgesehen, der beispielsweise den Ventilsitz eines Bodenablaufventils darstellen kann. Durch diesen Anschlussstutzen 20 könnte man das Abfließen des im Innenraum 11 befindlichen Fluides nach der Durchführung der Reaktion vornehmen.

Es ist auch denkbar, noch weitere Anschlussstutzen 20 auch an anderen Abschnitten der Behälterwand 12 vorzusehen, um etwa eine seitliche zusätzliche Zuführung von Reagenzien vorsehen zu können. Durch solche Anschlussstutzen 20 könnte man auch Messinstrumente in den Innenraum 11 einführen oder aber auch bestimmte Rührmechanismen oder andere Elemente durch die Behälterwandung 12 in den Innenraum 11 einführen.

Die Anschlussstutzen 20 sind dabei jeweils mit Einbauteilen versehen und beispielsweise verschließbar. Diese Einbauteile sind dann jeweils für den gewünschten Zweck ausgerüstet. Wie bereits oben erwähnt, wäre dies im Falle des unteren Anschlussstutzens 20 insbesondere ein Ventil, welches dann in dem Ventilsitz des Anschlussstutzens 20 montiert wird und durch das Ventil hindurch das Abströmen oder Abfließen des Fluides steuert.

Möglich ist es aber auch, ein Einbauteil mit einem Messinstrument oder einem hindurchgeführten Rührelement in einen solchen Anschlussstutzen 20 einzusetzen.

Denkbar ist es aber auch, einen Anschlussstutzen 20 durch ein Einbauteil komplett zu verschließen, also eine Art Stopfen als Einbauteil einzusetzen.

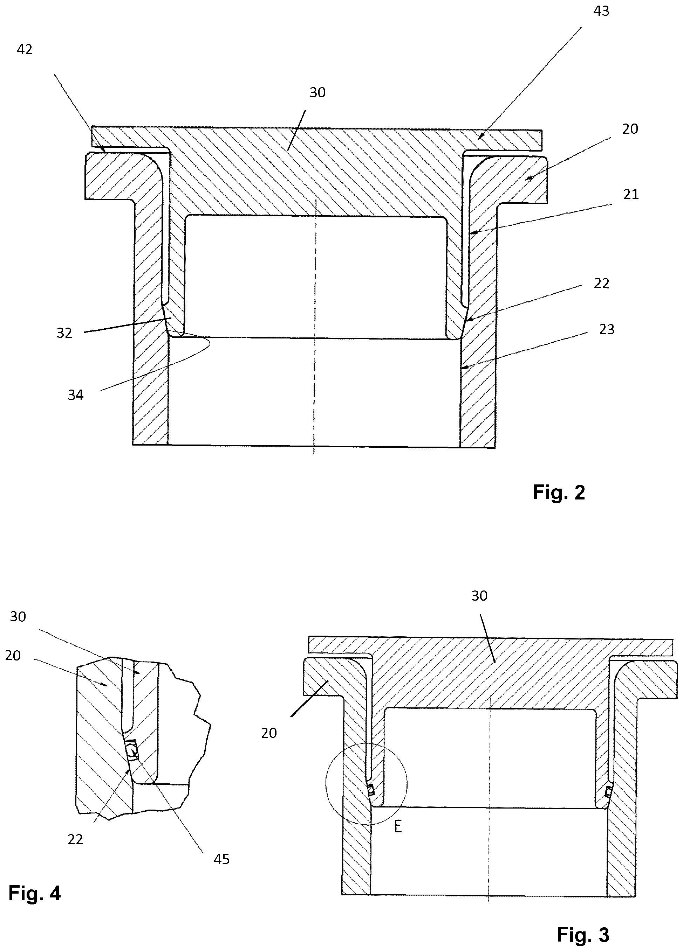

In der **Figur 2** ist nun eine vergrößerte Darstellung im Schnitt des Bereiches eines solchen Anschlussstutzens 20 mit einem Einbauteil 30 dargestellt.

Der Einfachheit halber ist das Einbauteil 30 hier ein Stopfen zum Verschließen des Anschlussstutzens 20. Der Innenraum 11 des Behälters 10 läge hier unterhalb der in der Figur 2 dargestellten Konstellation. Man könnte sich also vorstellen, dass es der obere Anschlussstutzen 20 aus der Figur 1 wäre, oder aber auch der untere Anschlussstutzen 20 in einer um 180° gedrehten Darstellung.

Der Anschlussstutzen 20 besitzt einen ersten zylindrischen Bereich 21, der die ringförmige Aushalsung benachbart zum Außenraum bildet. An diesen ersten zylindrischen Bereich 21 schließt sich in Richtung Innenraum ein konischer Bereich 22 an. In dem konischen Bereich 22 verjüngt sich die Öffnung des Anschlussstutzens 20, sie wird also in Richtung des Innenraums 11 enger.

An den konischen Bereich 22 schließt sich ein zweiter zylindrischer Bereich 23 an, der dann in Richtung Innenraum 11 führt.

Der gesamte Anschlussstutzen 20 ist um eine Mittelachse kreissymmetrisch. Dies ist für Anschlussstutzen 20 im Allgemeinen die sinnvollste Konzeption, da sie besonders viele Anwendungsfälle ermöglicht und in einen solchen Anschlussstutzen 20 auch Einbauteile 30 eingebaut werden können, die in ihrem Inneren nicht kreissymmetrische Elemente, Durchführungen etc. aufweisen.

Das Einbauteil 30 weist in der Ausführungsform in der Figur 2 einen konischen Bereich 32 auf, der die gleiche Steigung wie der konische Bereich 22 des Anschlussstutzens 20 hat. Das bedeutet, dass eine Außenfläche 34 des Einbauteils 30 in dem konischen Bereich 32 exakt an einer kegelförmigen Innenfläche 24 des konischen Bereichs 22 des Anschlussstutzens 20 anliegen kann. Ringförmig und rundum entsteht ein dichter Abschluss zwischen dem eingesetzten Einbauteil 30 und der vom Anschlussstutzen 20 gebildeten ringförmigen Aushalsung des Behälters 10.

Eine derartige Abdichtung ist gegenüber Fertigungstoleranzen sehr unempfindlich. Die Fertigungstoleranzen können durch geringfügig tieferes bzw. weniger tiefes Einführen des Einbauteils 30 in die Öffnung des Anschlussstutzens 20 ausgeglichen werden, wobei gleichwohl die Außenfläche 34 des Einbauteils 30 auf der kegelförmigen Innenfläche 24 des konischen Bereichs 22 des Anschlussstutzens 20 eine dichte Verbindung bildet.

Außerhalb des Behälters 10 können das Einbauteil 30 und der Anschlussstutzen 20 miteinander verbunden werden, wenn in der dargestellten Ausführungsform eine Flanschfläche 42 des Anschlussstutzens 20 passend zu einem Flanschabschnitt 43 des Einbauteils 30 vorgesehen werden. In diesen Flanschabschnitten 42, 43 können dann beispielsweise Schraubverbindungen vorgesehen werden.

In der **Figur 3** ist eine leicht modifizierte Ausführungsform zu sehen, die auch wiederum ein Einbauteil 30 in einem Anschlussstutzen 20 zeigt. Die zylindrischen Bereiche 21 und 23 sowie der konische Bereich 22 des Anschlussstutzens 20 sowie der konische Bereich 32 des Einbauteils 30 sind im Wesentlichen wie in der Ausführungsform aus der Figur 2 aufgebaut.

In der Außenfläche 34 des Einbauteils 30 ist hier zusätzlich ein weichdichtendes Element angedeutet, welches ringförmig innerhalb der kegelförmigen Außenfläche 34 des Einbauteils 30 umläuft und gegen die kegelförmige Innenfläche 24 des konischen Bereichs 22 abdichtet.

Dies ist vergrößert zusätzlich in der **Figur 4** dargestellt. Hier sieht man den konischen Bereich 22 gegenüber dem konischen Bereich 32 des Einbauteils 30 und im Querschnitt das weichdichtende Element 45. Es kann sich beispielsweise um einen O-Ring handeln.

Zum Einbau wird das Einbauteil 30 axial in den Anschlussstutzen 20 eingepresst. Es entsteht dann an der konischen Dichtfläche zwischen dem konischen Bereich 22 und dem konischen Bereich 32 eine Dichtkraft. Diese Dichtkraft realisiert in diesem Bereich nun eine statische Abdichtung.

Dies gilt insbesondere dann, wenn entweder das Einbauteil 30 selbst in gewissem Maße elastisch ist, oder aber wenn wie in der Ausführungsform in den Figuren 3 und 4 eine weichdichtende Variante mit einem O-Ring oder einem anderen weichelastischen Element 45 in die kegelförmige Außenfläche 34 integriert ist.

Grundsätzlich könnte auch die kegelförmige Außenfläche 24 entsprechend ausgebildet werden, um den gewünschten Effekt zu erzielen. Auch diese (nicht dargestellte) Ausführungsform ist also denkbar, sie schränkt allerdings die Möglichkeiten für den Einsatz eines derartigen Anschlussstutzens 20 ein.

Mit den dargestellten Konzepten aus den Figuren 2 bis 4 können Anschlussstutzen 20 mit einem Einbauteil 30 in der Form eines Stopfens ausgerüstet werden, ebenso aber auch mit einem Einbauteil 30 in Form eines Ventils oder aber auch in Form einer so genannten Reparaturschürze. Auch bei einer Beschädigung im Bereich der Flanschfläche 42 oder des dem Außenraum zugewandten zylindrischen Bereiches 21 des Anschlussstutzens 20 besteht dann die Möglichkeit, Reparaturschürzen als Einbauteil 30 einzusetzen.

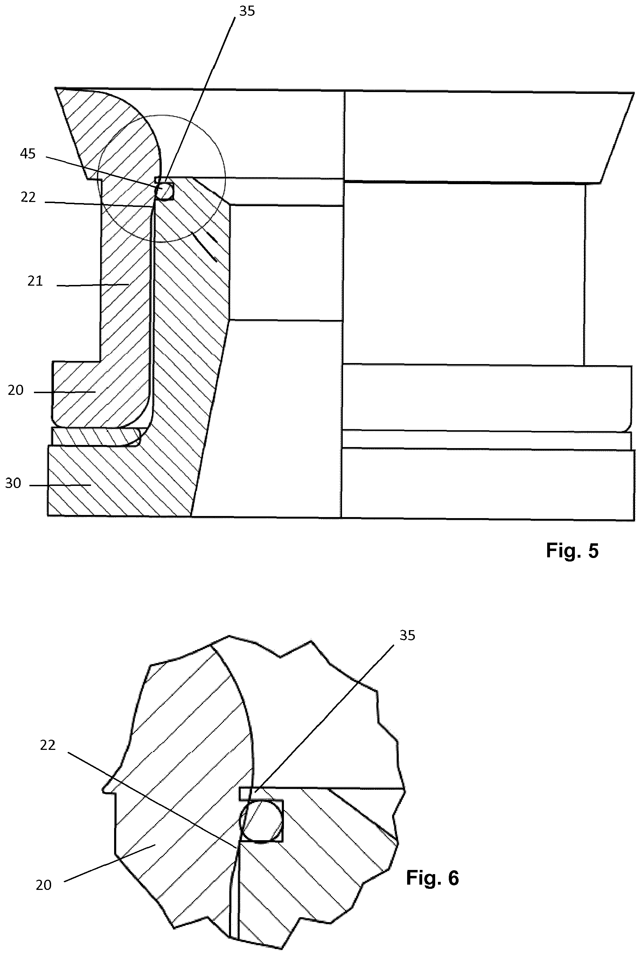

In der **Figur 5** sieht man im Schnitt eine schematische Darstellung einer anderen Ausführungsform eines emaillierten Behälters mit einem Anschlussstutzen 20 in modifizierter Form.

In der Figur 5 ist jetzt der Innenraum 11 des Behälters 10 oben zu denken, also um 180° gedreht gegenüber den Darstellungen in den Figuren 2, 3 und 4. Man sieht wiederum den Anschlussstutzen 20 und in diesen hier von unten eingeführt das Einbauteil 30.

Das Einbauteil 30 sei hier aus einem verformungsfähigen Werkstoff gedacht. Der Anschlussstutzen 20 besitzt auch hier einen zylindrischen Abschnitt 21, der in einen konischen Abschnitt 22 übergeht. Der konische Abschnitt 22 geht dann in Richtung zum Innenraum 11 des Behälters 10 in eine gebogene Kontur über.

Das Einbauteil 30 besitzt hier keinen konischen Bereich 32, dafür aber eine Lippe 35 aus ebenfalls dem verformungsfähigen Werkstoff.

Die Lippe 35 wird durch ein weichelastisches Element 45 unterstützt, beispielsweise wiederum durch einen O-Ring.

Wird bei dieser Ausführungsform nun das Einbauteil 30 in den Anschlussstutzen 20 eingedrückt, so wird sich die Lippe 35 leicht verformen und gegen die kegelförmige Innenfläche 24 des konischen Bereich 22 am Anschlussstutzen 20 abdichten.

Ein derartiges Konzept ist gegenüber Fertigungstoleranzen besonders unempfindlich und damit fertigungstechnisch gut beherrschbar.

Die kegelförmige Außenfläche 34 am Einbauteil 30 existiert in diesem Falle nicht von Anfang an, sondern sie entsteht quasi erst dann, wenn das Einbauteil 30 in den Anschlussstutzen 20 eingepresst wird und die Lippe 35 sich entsprechend verformt.

In der Figur 5 ist diese Verformung nicht dargestellt. Statt dessen sieht es geometrisch so aus, als ob sich die Bauteile durchdringen. Dies ist natürlich nicht der Fall, sondern das Durchdringen ergibt gerade aufgrund des verformungsfähigen Werkstoffes des Einbauteils 30 im Ergebnis eine Art kegelförmige Außenfläche oder auch eine linienförmige Dichtkante.

In der **Figur 6** sieht man gerade diesen Bereich der Lippe 35 nochmals vergrößert herausgezeichnet. Das weichelastische Element 45 und die aus verformungsfähigem Werkstoff bestehende Lippe 35 weichen bei einem Einpressen des Einbauteils 30 nach oben dem weniger nachgiebigen Werkstoff des Anschlussstutzens 20 in diesem konischen Bereich 22 entsprechend aus und bilden so die Abdichtung.

Die zylindrischen Bereiche 21 und 23 benachbart zum konischen Bereich 22 sind für die unmittelbare Funktion des erfinderischen Konzeptes nicht zwingend. Die emaillierten Behälter 10 werden mit Anschlussstutzen 20 ausgeführt, die eine gewisse Länge aufweisen. Diese Gesamtlänge muss mittels der zylindrischen Bereiche 21 und 23 überbrückt werden, denn der konische Bereich 22 selbst kann nicht so lang sein, wie der gesamte Anschlussstutzen 20. Auch bei einem kleinen Konuswinkel würde ansonsten über die Länge des Anschlussstutzens 20 eine zu kleine bzw. überhaupt keine Flanschfläche 42 mehr übrig bleiben.

Es ist auch möglich, den Anschlussstutzen 20 des Behälters 10 ohne ein Einbauteil 30 zu verwenden. Das ermöglicht eine deutlich erweiterte Anwendbarkeit des entsprechenden Behälterkonzeptes. In diesem Falle wird die Innenfläche in den zylindrischen Bereichen 21 und 23 und dem konischen Bereich 22 insgesamt durch das Fluid aus dem Innenraum 11 berührt bzw. wird durch dieses berührbar. Denkbar ist hier auch eine Abdichtung nur von außen über die Flanschfläche 42. Auch diese Funktion wird durch das Vorhandensein des konischen Bereich 22 möglich und nicht gestört.

Wird dagegen mit einem Einbauteil 30 gearbeitet, so werden vom Medium bzw. dem Fluid im Innenraum 11 nur die Innenfläche des zylindrischen Bereichs 23 und die dem Innenraum 11 zugewandte Oberfläche des Einbauteils 30 berührt. Die Innenfläche des konischen Bereichs 22 und des dem Außenraum zugewandten zylindrischen Bereichs 21 und auch die dem Innenraum 11 abgewandten Flächen des Einbauteils 30 werden dagegen nicht durch das Fluid aus dem Innenraum 11 berührt. Es entsteht eine Dichtkante am unteren Ende der kegelförmigen Außenfläche 34 des Einbauteils 30, welche linienförmig gegen die kegelförmige Innenfläche 24 des Anschlussstutzens 20 abdichtet. In diesem Bereich gibt es also keinen Totraum. Der Raum zwischen dem Einbauteil 30 und dem Anschlussstutzen 20 in der Umgebung des zylindrischen Bereichs 21 steht mit dem Fluid nicht in Kontakt und ist damit kein Totraum.

### Bezugszeichenliste

- 10: Behälter
- 11: Innenraum des Behälters 10
- 12: Behälterwandung
- 13: Wandungsinnenseite der Behälterwandung 12

- 20: Anschlussstutzen
- 21: zylindrischer Bereich
- 22: konischer Bereich
- 23: zylindrischer Bereich
- 24: kegelförmige Innenfläche des konischen Bereichs 22

- 30: Einbauteil
- 32: konischer Bereich
- 34: Außenfläche des Einbauteils 30
- 35: Lippe

- 42: Flanschfläche des Anschlussstutzens 20
- 43: Flanschabschnitt des Einbauteils 30
- 45: weichdichtendes Element

## Patentansprüche

1. Emaillierter Behälter (10) oder anderes emailliertes Bauteil mit innerem Volumen,
mit einem Innenraum (11) zur Aufnahme von fluiden Medien,
mit einer Behälterwandung (12), die den Innenraum (11) von der Umgebung trennt, mit einer dem Innenraum (11) zugewandten Wandungsinnenseite (13),
mit mindestens einem durch die Behälterwandung (12) geführten Anschlussstutzen (20), der eine ringförmige Aushalsung der Behälterwandung (12) aufweist und eine Öffnung vom Innenraum (11) in die Umgebung bildet, und
mit einem Einbauteil (30), das passend zum Einbau in die Öffnung des Anschlussstutzens (20) ausgebildet ist,
**wobei** der Anschlussstutzen (20) einen konischen Abschnitt (22) aufweist, der sich in Richtung zum Innenraum (11) des Behälters (10) eine kegelförmige Innenfläche (24) zur Öffnung bildet, und
**wobei** das Einbauteil einen konischen Bereich (32) mit einer Außenfläche (34) aufweist, die die gleiche Steigung wie der konische Bereich (22) des Anschlussstutzens (20) hat und nach dem Einsetzen des Einbauteils (30) mit dem konischen Abschnitt (22) des Anschlussstutzens (20) eine Abdichtung bildet,
**dadurch gekennzeichnet,**
**dass** die Außenfläche (34) des Einbauteils (30) nach dem Einsetzen des Einbauteils (30) an der kegelförmigen Innenfläche (24) des konischen Abschnitts (22) des Anschlussstutzens (20) exakt anliegt und eine statische und totraumarme Abdichtung bildet.

2. Emaillierter Behälter (10) oder anderes emailliertes Bauteil mit innerem Volumen nach Anspruch 1,
**dadurch gekennzeichnet,**
**dass** das Einbauteil (30) einen konischen Abschnitt (32) aufweist, der sich in Richtung zum Innenraum (11) des Behälters (10) verjüngt.

3. Emaillierter Behälter (10) oder anderes emailliertes Bauteil mit innerem Volumen nach Anspruch 2,
**dadurch gekennzeichnet,**
**dass** der konische Abschnitt (32) des Einbauteils (30) den gleichen oder einen kleineren Steigungswinkel wie die kegelförmige Innenfläche (24) des konischen Abschnitts (22) des Anschlussstutzens (20) besitzt.

4. Emaillierter Behälter (10) oder anderes emailliertes Bauteil mit innerem Volumen nach einem der vorstehenden Ansprüche,
**dadurch gekennzeichnet,**
**dass** der Anschlussstutzen (20) mit mindestens zwei im Wesentlichen ringförmigen oder zylindrischen Bereichen (21, 23) versehen ist, welche sich auf verschiedenen Seiten des konischen Abschnitts (22) befinden, sodass der Durchmesser des im Wesentlichen ringförmigen oder zylindrischen Bereiches (21) auf der dem Innenraum (11) des emaillierten Behälters (10) zugewandten Seite einen kleineren Durchmesser besitzt, als der im Wesentlichen ringförmige oder zylindrische Bereich (23) auf der der Umgebung zugewandten Seite des konischen Abschnittes (22).

5. Emaillierter Behälter (10) oder anderes emailliertes Bauteil mit innerem Volumen nach einem der vorstehenden Ansprüche,
**dadurch gekennzeichnet,**
**dass** das Einbauteil (30) einen außerhalb des Behälters (10) mit der Behälterwandung (12) mittelbar oder unmittelbar verbindbaren Flanschabschnitt (43) aufweist.

6. Emaillierter Behälter (10) oder anderes emailliertes Bauteil mit innerem Volumen nach einem der vorstehenden Ansprüche,
**dadurch gekennzeichnet,**
**dass** das Einbauteil (30) mit einem umlaufenden Außenumfang ausgestattet ist, der nach dem Einsetzen des Einbauteils (30) in den Anschlussstutzen (20) die kegelförmige Innenfläche (24) des Anschlussstutzens (20) voll umfänglich berührt.

7. Emaillierter Behälter (10) oder anderes emailliertes Bauteil mit innerem Volumen nach einem der vorstehenden Ansprüche,
**dadurch gekennzeichnet,**
**dass** die kegelförmige Innenfläche (24) des Anschlussstutzens (20) einen Steigungswinkel von weniger als 45°, bevorzugt von 15° oder weniger, besitzt.

8. Emaillierter Behälter (10) oder anderes emailliertes Bauteil mit innerem Volumen nach einem der vorstehenden Ansprüche,
**dadurch gekennzeichnet,**
**dass** auch die zylindrischen (21, 23) und kegelförmigen Innenflächen (24) und/oder der Flanschabschnitt (42) des Anschlussstutzens (20) emailliert sind.

9. Emaillierter Behälter (10) oder anderes emailliertes Bauteil mit innerem Volumen nach einem der vorstehenden Ansprüche,
**dadurch gekennzeichnet,**
**dass** das Einbauteil (30) einen Abschnitt auf seiner Außenfläche (34) aufweist, der weichdichtend ausgeführt ist oder ein weichdichtendes Element (45), insbesondere einen O-Ring, aufnimmt oder
**dass** das Einbauteil (30) in diesem Bereich eine geringere radiale Steifigkeit aufweist als der gegenüberliegende Abschnitt des Anschlussstutzens (20).

## Claims

1. Enamelled container (10) or other enamelled component having an internal volume,
having an internal space (11) for receiving fluid media, comprising a container wall (12) which separates the internal space (11) from the surroundings, and having a wall inner side (13) facing toward the internal space (11),
comprising at least one connecting piece (20) guided through the container wall (12), said connecting piece comprising an annular neck extension of the container wall (12) and forming an opening from the internal space (11) into the surroundings, and comprising a fitting part (30) which is configured fittingly for installation into the opening of the connecting piece (20),
**wherein** the connecting piece (20) has a conical portion (22) which, in the direction toward the internal space (11) of the container (10), forms a tapered internal surface (24) toward the opening, and **wherein** the fitting part has a conical region (32) with an outer surface (34) which has the same inclination as the conical region (22) of the connecting piece (20) and, following the insertion of the fitting part (30), forms a seal with the conical portion (22) of the connecting piece (20),
**characterised in that,**
following the insertion of the fitting part (30), the outer surface (34) of the fitting part (30) exactly abuts against the tapered internal surface (24) of the conical portion (22) of the connecting piece (20) and forms a static and dead-space-free seal.

2. Enamelled container (10) or other enamelled component having an internal volume according to claim 1,
**characterised in that**
the fitting part (30) has a conical portion (32) which narrows in the direction toward the internal space (11) of the container (10).

3. Enamelled container (10) or other enamelled component having an internal volume according to claim 2,
**characterised in that**
the conical portion (32) of the fitting part (30) has the same or a smaller inclination angle than the tapered internal surface (24) of the conical portion (22) of the connecting piece (20).

4. Enamelled container (10) or other enamelled component having an internal volume according to one of the preceding claims,
**characterised in that**
the connecting piece (20) is provided with at least two substantially annular or cylindrical regions (21, 23) which are situated on different sides of the conical portion (22), so that the diameter of the substantially annular or cylindrical region (21) on the side facing toward the internal space (11) of the enamelled container (10) has a smaller diameter than the substantially annular or cylindrical region (23) on the side of the conical portion (22) facing toward the surroundings.

5. Enamelled container (10) or other enamelled component having an internal volume according to one of the preceding claims,
**characterised in that**
the fitting part (30) comprises a flange portion (43) which is outside the container (10) and which is connectable indirectly or directly to the container wall (12).

6. Enamelled container (10) or other enamelled component having an internal volume according to one of the preceding claims,
**characterised in that**
the fitting part (30) is equipped with a surrounding outer periphery which, following the insertion of the fitting part (30) into the connecting piece (20), makes contact fully peripherally with the tapered internal surface (24) of the connecting piece (20).

7. Enamelled container (10) or other enamelled component having an internal volume according to one of the preceding claims,
**characterised in that**
the tapered internal surface (24) of the connecting piece (20) has an inclination angle of less than 45°, preferably of 15° or less.

8. Enamelled container (10) or other enamelled component having an internal volume according to one of the preceding claims,
**characterised in that**
the cylindrical (21, 23) and tapered internal surfaces (24) and/or the flange portion (42) of the connecting piece (20) are also enamelled.

9. Enamelled container (10) or other enamelled component having an internal volume according to one of the preceding claims,
**characterised in that**
the fitting part (30) comprises a portion on its external surface (34) that is configured flexibly sealing or receives a flexibly sealing element (45), in particular an O-ring or
**in that** in this region the fitting part (30) has a lower radial stiffness than the opposite portion of the connecting piece (20).

## Revendications

1. Récipient émaillé (10) ou autre composant émaillé avec un volume intérieur,
avec un espace intérieur (11) pour la réception de milieux fluides,
avec une paroi de récipient (12) qui sépare l'espace intérieur (11) de l'environnement, avec un côté intérieur de paroi (13) tourné vers l'espace intérieur (11),
avec au moins une tubulure de raccordement (20) guidée au travers de la paroi de récipient (12), qui présente une encolure annulaire de la paroi de récipient (12) et forme une ouverture de l'espace intérieur (11) dans l'environnement, et
avec une partie d'intégration (30) qui est réalisée de manière adaptée à l'intégration dans l'ouverture de la tubulure de raccordement (20),
dans lequel la tubulure de raccordement (20) présente une section conique (22) qui forme une surface intérieure conique (24) en direction de l'espace intérieur (11) du récipient (10) et
dans lequel la partie d'intégration présente une zone conique (32) avec une surface extérieure (34) qui a la même pente que la zone conique (22) de la tubulure de raccordement (20) et forme une étanchéité après l'insertion de la partie d'intégration (30) avec la section conique (22) de la tubulure de raccordement (20),
**caractérisé en ce que**
la surface extérieure (34) de la partie d'intégration (30) repose exactement après l'insertion de la partie d'intégration (30) contre la surface intérieure conique (24) de la section conique (22) de la tubulure de raccordement (20) et forme une étanchéité statique et sans zone morte.

2. Récipient émaillé (10) ou autre composant émaillé avec un volume intérieur selon la revendication 1,
**caractérisé en ce que**
la partie d'intégration (30) présente une section conique (32) qui se rétrécit en direction de l'espace intérieur (11) du récipient (10).

3. Récipient émaillé (10) ou autre composant émaillé avec un volume intérieur selon la revendication 2,
**caractérisé en ce que**
la section conique (32) de la partie d'intégration (30) possède le même ou un angle de pas plus petit que la surface intérieure conique (24) de la section conique (22) de la tubulure de raccordement (20).

4. Récipient émaillé (10) ou autre composant émaillé avec un volume intérieur selon l'une quelconque des revendications précédentes,
**caractérisé en ce que**
la tubulure de raccordement (20) est pourvue d'au moins deux zones (21, 23) cylindriques ou sensiblement annulaires, qui se trouvent sur des côtés différents de la section conique (22) de sorte que le diamètre de la zone (21) cylindrique ou sensiblement annulaire possède sur le côté tourné vers l'espace intérieur (11) du récipient émaillé (10) un plus petit diamètre que la zone (23) cylindrique ou sensiblement annulaire sur le côté tourné vers l'environnement de la section conique (22).

5. Récipient émaillé (10) ou autre composant émaillé avec un volume intérieur selon l'une quelconque des revendications précédentes,
**caractérisé en ce que**
la partie d'intégration (30) présente une section de bride (43) pouvant être reliée directement ou indirectement en dehors du récipient (10) à la paroi de récipient (12).

6. Récipient émaillé (10) ou autre composant émaillé avec un volume intérieur selon l'une quelconque des revendications précédentes,
**caractérisé en ce que**
la partie d'intégration (30) est équipée d'une périphérie extérieure tournante qui touche, sur toute la périphérie après l'insertion de la partie d'intégration (30) dans la tubulure de raccordement (20), la surface intérieure conique (24) de la tubulure de raccordement (20).

7. Récipient émaillé (10) ou autre composant émaillé avec un volume intérieur selon l'une quelconque des revendications précédentes,
**caractérisé en ce que**
la surface intérieure conique (24) de la tubulure de raccordement (20) possède un angle de pas de moins de 45°, de préférence de 15° ou moins.

8. Récipient émaillé (10) ou autre composant émaillé avec un volume intérieur selon l'une quelconque des revendications précédentes,
**caractérisé en ce que**
les surfaces intérieures cylindriques (21, 23) et coniques (24) et/ou la section de bride (42) de la tubulure de raccordement (20) sont émaillées.

9. Récipient émaillé (10) ou autre composant émaillé avec un volume intérieur selon l'une quelconque des revendications précédentes,
**caractérisé en ce que**
la partie d'intégration (30) présente une section sur sa surface extérieure (34) qui est réalisée avec une garniture souple ou reçoit un élément (45) avec une garniture souple, en particulier un joint torique ou
**en ce que** la partie d'intégration (30) présente dans cette zone une rigidité radiale plus faible que la section en regard de la tubulure de raccordement (20).
